# FASCICULE DE BREVET EUROPEEN

(11) **EP 0 514 719 B1**
(45) Date de publication et mention de la délivrance du brevet: **13.09.1995**
(21) Numéro de dépôt: 92107772.3
(22) Date de dépôt: 08.05.1992
(51) Int. Cl.: B29D 30/54, B60C 9/18, B60C 11/00

(54) **Procédé de déchapage des pneumatiques, et bandes de roulement spécifiquement développées pour appliquer ce procédé**
Verfahren zum Runderneuern von Reifen und speziell zur Anwendung des Verfahrens ausgelegte Reifen
Method for retreading tyres and tyres specially adapted for applying the method

(30) Priorité: 23.05.1991 FR 9106255
(43) Date de publication de la demande: 25.11.1992
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Dugas, Hubert, F-63200 RIOM (FR)
(74) Mandataire: Bauvir, Jacques

(56) Documents cités:
- EP-A- 0 088 038
- EP-A- 0 403 420
- AT-B- 385 237

## Description

La présente invention concerne le rechapage des pneumatiques, plus spécifiquement elle propose un nouveau procédé de déchapage des pneumatiques, c'est-à-dire un nouveau procédé pour enlever la bande de roulement usagée avant de rechaper.

Les pneumatiques comportent un renforcement de sommet, en général disposé au-dessus de la nappe de carcasse du pneu. Ces renforcements de sommet comportent de plus en plus souvent un renfort disposé à zéro degré, c'est-à-dire orienté dans la direction circonférentielle du pneumatique, pour constituer une frette. Celle-ci peut être disposée soit sur la totalité de la largeur du sommet du pneumatique, soit sur une partie de celui-ci, par exemple sur les bords latéraux. Il est possible de réaliser ces renforts à zéro degré de différentes manières. Par exemple, on réalise une nappe dont la largeur correspond à la largeur du renfort à zéro degré, enroulée en un tour ou plusieurs tours avec une soudure par légère superposition des extrémités circonférentielles de la nappe. Une autre technique consiste à utiliser une bandelette comportant plusieurs fils parallèles, par exemple 10, et à bobiner cette bandelette jusqu'à obtenir le renfort souhaité.

Un renfort à zéro degré peut également être constitué à partir d'un seul fil qui est bobiné sur le sommet du pneumatique pour réaliser le renforcement souhaité. Dans ces deux derniers cas, le fil n'est pas posé exactement à zéro degré puisque l'on retrouve un très faible angle correspondant au pas de pose du fil. Il est cependant usuel de caractériser toutes ces réalisations par un angle à zéro degré.

Dans la présente description le terme "fil" doit être compris dans un sens le plus général : un fil de renforcement est constitué, soit par un fil unitaire ou par un assemblage constituant un câble ou par tout type d'assemblage équivalent, et ceci quelle que soit la nature du fil.

Avant de procéder au rechapage d'un pneumatique, il faut enlever ce qu'il reste de la bande de roulement qui a été utilisée. Pour ôter la bande de roulement, on procède a une opération d'usinage avec un outil tranchant, jusqu'à débarrasser la carcasse du pneumatique de toute trace de caoutchouc de la bande de roulement. Cette opération est bien connue de l'homme du métier.

La présente invention propose une nouvelle façon d'effectuer cette opération de préparation de la carcasse. Pour ôter la bande de roulement, il est proposé d'utiliser le fil à zéro degré quand le renforcement de sommet en comporte. En effet, il a été constaté que l'on pouvait procéder au déchapage d'un pneumatique dont le renfort de sommet comporte sur l'ensemble de la largeur dudit sommet un fil à zéro degré bobiné en spirale en saisissant au moins une des extrémités dudit fil et en exerçant une traction dans le sens transversal sur ledit fil pour l'extraire en totalité du renforcement de sommet. Un renfort à zéro degré constitué par un fil unique bobiné sur le sommet se prête parfaitement au déchapage selon cette invention.

On constate aussi que les renforts à zéro degré constitués à partir d'une bandelette se prêtent également à l'utilisation de ce nouveau procédé de déchapage, et ceci d'autant mieux que la bandelette comporte un petit nombre de fils, par exemple 3 fils. Dans ce cas, il faut saisir simultanément tous les fils de la bandelette pour déchaper par traction sur les fils dans le sens transversal.

Dans la suite de la description, l'expression "fil unique" désigne spécifiquement un renfort à zéro degré réalisé avec un seul assemblage ou fil unitaire, sinon, le terme "fil" englobe aussi bien le cas d'un fil unique que d'une bandelette composée d'un petit nombre de fils.

Ce procédé de déchapage peut encore être utilisé lorsque le fil à zéro degré comporte des ondulations formant, dans le plan de renfort, approximativement des sinusoïdes, comme cela est bien connu pour des nappes de protection utilisées par exemple dans les pneumatiques pour avion.

Les figures jointes illustrent l'invention appliquée au déchapage à l'aide d'un fil unique non ondulé, bobiné à zéro degré.

La figure 1 est un écorché du pneumatique avant déchapage.

La figure 2 schématise l'opération de déchapage.

Les figures 3 et 4 représentent ce que l'on obtient après déchapage : la bande de roulement (figure 3) et la carcasse prête pour un rechapage (figure 4).

La figure 5 est un écorché d'une bande de roulement prévulcanisée incorporant un renfort à zéro degré, prévu pour utiliser ultérieurement le procédé de rechapage de l'invention.

La figure 6 est un écorché du résultat de l'opération de rechapage.

Aux figures jointes, on voit un pneumatique comportant deux flancs 3 et une bande de roulement 10, renforcé par une nappe de carcasse 2 ancrée à deux tringles 1.

On voit aussi deux nappes de sommet 4 et 5 formant avec la nappe de carcasse 2 la ceinture triangulée classique de la plupart des pneumatiques radiaux. Le pneumatique comporte une couche de caoutchouc 6 recouvrant les nappes de sommet 4 et 5, et un renfort de sommet à zéro degré, réalisé par un fil unique 7 bobiné depuis un départ 8D sur l'une des épaules du pneumatique, jusqu'à l'extrémité opposée 8F sur l'autre épaule du pneumatique.

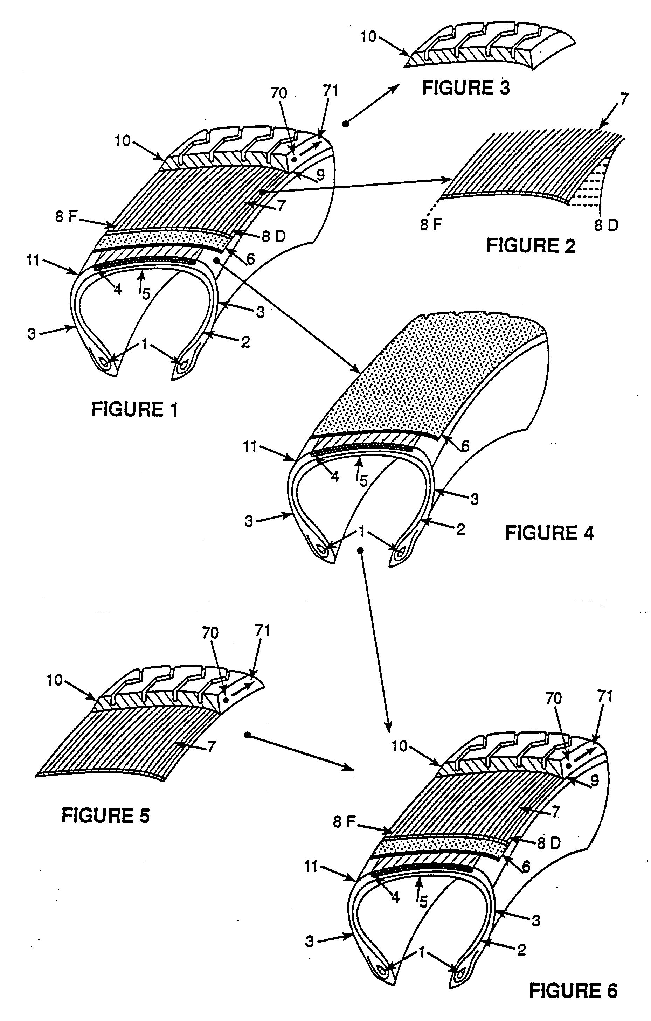

Le fil 7 à zéro degré, bobiné en continu pour former le renfort de sommet, constitue en puissance le moyen de séparer la bande de roulement 10 (qui se trouve par-dessus ce fil 7 à zéro degré) de la carcasse 11 du pneumatique (qui se trouve par-dessous ce fil à zéro degré). Pour les épaisseurs de caoutchouc couramment présentes entre deux fils 7 adjacents, l'effort de traction dans le sens transversal, c'est-à-dire dans le sens approximativement perpendiculaire à la direction initiale du fil, est relativement faible au point qu'il est fort commode d'arracher le fil manuellement. Cette opération est schématisée par la figure 2. En revanche, à hauteur des épaules du pneumatique, l'épaisseur de caoutchouc présente entre la surface du pneumatique à l'épaule et le premier fil 7 à zéro degré peut très bien être trop importante pour pouvoir être cisaillée par la traction sur le fil 7. Dans ce cas, au moyen d'un outil tranchant, on enlève du caoutchouc à partir d'une épaule du pneumatique, jusqu'à rejoindre l'extrémité du fil à zéro degré 7. Après déchapage selon ce procédé, on obtient la carcasse 11 prête à rechaper, telle qu'elle apparaît à la figure 4.

Il peut arriver que cette opération de déchapage soit interrompue par une coupure du fil 7. Dans ce cas, il est aisé de rechercher avec un outil tranchant la nouvelle extrémité du fil 7 avant de reprendre son extraction.

Il est bien entendu possible d'adapter la conception de la structure de renforcement du pneumatique à l'utilisation que l'on fait du fil à zéro degré pour le déchapage, et ceci au niveau de la fabrication du pneu neuf. Dans ce cas, le fil à zéro degré sera disposé depuis un bord jusqu'à l'autre en laissant le moins d'épaisseur de caoutchouc possible entre le dernier fil et la surface du pneumatique à l'épaule. Si ce n'est pas le cas, lors de l'opération de rechapage dudit pneumatique, après avoir débuté le déchapage par une opération d'usinage, on le poursuit par traction sur le fil à zéro degré, et on termine la séparation de la bande de roulement et de la carcasse au moyen d'un outil tranchant.

Afin de faciliter l'utilisation du procédé de déchapage selon l'invention, le pneumatique dont un renforcement de sommet comporte un fil à zéro degré bobiné depuis un côté jusqu'à l'autre dudit sommet, est caractérisé en ce que la position d'au moins une des extrémités dudit fil disposé à zéro degré est repérée sur l'épaule du pneumatique.

Ce marquage est tout spécialement intéressant lorsqu'il est possible de déchaper en totalité par traction sur le fil à zéro degré, ce qui est toujours le cas lorsque le fil à zéro degré affleure la surface du pneumatique à l'épaule de celui-ci. Pour faciliter encore l'extraction du fil à zéro degré, il est avantageux de repérer sur l'épaule du pneumatique, le sens du bobinage à zéro degré. En effet, l'arrachage du fil est facilité lorsqu'on incline légèrement celui-ci dans le sens du bobinage.

Il est possible également de réaliser, pour le rechapage des carcasses 11, des bandes de roulement annulaires prémoulées dont la semelle comporte, sur l'ensemble de sa largeur, un fil à zéro degré disposé en spirale et enfoui juste sous la surface de ladite semelle. Un mode de réalisation de telles bandes de roulement annulaires consiste, par exemple, à appliquer une couche de mélange caoutchoutique non vulcanisé de faible épaisseur sur la surface extérieure d'une forme cylindrique ou quasi-cylindrique, à bobiner sur ledit calandrage un fil unique à zéro degré depuis un départ 8D sur un côté latéral du calandrage jusqu'à l'extrémité opposée 8F sur l'autre côté latéral, à mettre en place le mélange caoutchoutique non vulcanisé correspondant à la bande de roulement, à placer l'assemblage précédent dans un moule annulaire à sculptures et à vulcaniser l'ensemble. Il est avantageux d'indiquer la position 70 (figure 5) et le sens de départ 71 d'au moins une des extrémités du fil à zéro degré sur le côté latéral de ladite bande de roulement. Ainsi, lorsque la bande de roulement a été rapportée sur une carcasse 11 par une opération de rechapage, on connaît le point 70 où va débuter l'extraction du fil à zéro degré pour l'opération de déchapage ultérieur.

Un second mode de réalisation d'un renfort de sommet à zéro degré approprié à l'invention consiste à bobiner un fil unique 7 en deux parties, à partir des départs 8D et 8F sur les épaules du pneumatique et avec le même sens de bobinage, jusqu'au centre dudit sommet du pneumatique.

Dans ce cas, l'opération de déchapage consiste, simultanément ou successivement, à saisir les deux extrémités 8D et 8F et à exercer un effort de traction transversal jusqu'à l'extraction complète du fil unique de renfort 7.

L'avantage de ce second mode de réalisation du renfort de sommet à zéro degré par rapport au premier est de permettre un déchapage plus rapide tout en étant aussi aisé.

Bien entendu, ce second mode de réalisation d'un renfort de sommet à zéro degré approprié à l'invention peut être inclu dans la réalisation de pneumatiques neufs. Il est alors préférable de repérer les deux extrémités 8D et 8F des deux bobinages ainsi que leur sens commun de bobinage sur les épaules des pneumatiques.

De la même manière, il est aussi possible de réaliser des bandes de roulement annulaires prémoulées en incorporant à l'intérieur de celles-ci un fil de renforcement bobiné en deux parties, à partir des deux côtés de la semelle de la bande de roulement jusqu'à son centre, et en indiquant sur les flancs latéraux de ladite bande de roulement les positions de départ du fil à zéro degré ainsi que son sens de bobinage.

Jusqu'à la présente invention, le déchapage et la préparation préalables de la carcasse imposaient toujours l'utilisation d'un matériel assez coûteux pour effectuer une opération d'usinage de la carcasse. Grâce à la présente invention, le déchapage préalable de la carcasse est une opération très aisée. Il est donc possible de délocaliser le rechapage jusqu'aux ateliers d'entretien des véhicules. On peut donc promouvoir un déchapage et rechapage très fréquents, par exemple lorsque la sculpture de la bande de roulement est usée à plus de 50 %. Il est bien connu que les aptitudes de drainage de l'eau se dégradent très fortement au fur et à mesure de l'usure des sculptures. On peut donc envisager d'utiliser plusieurs fois la carcasse du pneumatique, et de remplacer la bande de roulement du pneumatique aussi souvent que nécessaire, par exemple pour passer d'une sculpture été à une sculpture hiver.

## Revendications

1. Procédé de déchapage d'un pneumatique dont le renfort de sommet comporte sur l'ensemble de la largeur dudit sommet un fil à zéro degré bobiné en spirale, consistant à saisir au moins une extrémité dudit fil (7) et à exercer une traction dans le sens transversal sur ledit fil (7) pour l'extraire en totalité du renforcement de sommet.

2. Procédé de déchapage selon la revendication 1, caractérisé en ce que, au moyen d'un outil tranchant, on enlève du caoutchouc à partir d'au moins une épaule du pneumatique, jusqu'à rejoindre l'extrémité (8D) du fil (7) à zéro degré.

3. Procédé de déchapage selon l'une des revendications 1 et 2, caractérisé en ce que, après extraction du fil (7) à zéro degré, on termine la séparation de la bande de roulement 10 et de la carcasse 11 au moyen d'un outil tranchant.

4. Procédé de déchapage selon l'une des revendications 1 à 3 appliqué à un pneumatique dont le renfort de sommet à zéro degré est réalisé à partir d'un fil (7) unique.

5. Procédé de déchapage selon l'une des revendications 1 à 3, caractérisé en ce qu'il est appliqué au moyen d'un fil (7) unique bobiné depuis un départ (8D) sur une épaule du pneumatique jusqu'à l'extrémité opposée (8F) sur l'autre épaule du pneumatique.

6. Procédé de déchapage selon l'une des revendications 1 à 3, caractérisé en ce qu'il est appliqué au moyen d'un fil (7) unique, bobiné en deux parties, à partir des départs (8D) et (8F) sur les épaules du pneumatique et avec le même sens de bobinage, jusqu'au centre dudit sommet du pneumatique.

7. Pneumatique dont le renforcement de sommet comporte sur l'ensemble de la largeur dudit sommet un fil à zéro degré bobiné en spirale, caractérisé en ce que la position d'au moins une des extrémités (8D) dudit fil (7) disposé à zéro degré est repérée sur au moins une épaule du pneumatique.

8. Pneumatique selon la revendication 7, caractérisé en ce que le sens (71) de bobinage du fil à zéro degré à partir de l'extrémité (8D) est repéré sur l'épaule du pneumatique.

9. Pneumatique selon l'une des revendications 7 et 8, caractérisé en ce que le fil à zéro degré est un fil (7) unique, bobiné depuis un départ (8D) sur une épaule jusqu'à l'extrémité opposée (8F) sur l'autre épaule.

10. Pneumatique selon l'une des revendications 7 et 8, caractérisé en ce que le fil à zéro degré est un fil (7) unique, bobiné en deux parties, à partir des départs (8D) et (8F) sur les épaules dudit pneumatique et avec le même sens de bobinage, jusqu'au centre du sommet dudit pneumatique.

11. Utilisation en rechapage d'une bande de roulement annulaire prémoulée dont la semelle comporte, sur l'ensemble de sa largeur, un fil à zéro degré disposé en spirale et enfoui juste sous la surface de la semelle.

12. Bande de roulement annulaire prémoulée dont la semelle comporte, sur l'ensemble de la largeur de ladite bande de roulement, un fil (7) à zéro degré disposé en spirale et enfoui juste sous la surface de la semelle, caractérisée en ce que la position d'au moins une des extrémités dudit fil (7) disposé à zéro degré est repérée sur au moins un côté latéral de ladite bande de roulement.

13. Bande de roulement selon la revendication 12, caractérisée en ce que le sens de bobinage (71) du fil à zéro degré à partir de l'extrémité dudit fil (7) est repéré sur ledit côté.

14. Bande de roulement selon l'une des revendications 12 et 13, caractérisée en ce que le fil à zéro degré est un fil (7) unique, bobiné depuis un départ (8D) contre un côté latéral de ladite bande de roulement jusqu'à l'extrémité opposée (8F) de l'autre côté.

15. Bande de roulement selon l'une des revendications 12 et 13, caractérisée en ce que le fil à zéro degré est un fil (7) unique, bobiné en deux parties, à partir des départs (8D) et (8F) contre les côtés latéraux de ladite bande de roulement et avec le même sens de bobinage, jusqu'au centre dudit sommet du pneumatique.

## Claims

1. A method of removing the tread of a tyre, the crown reinforcement of which has a spirally wound zero-degree cord over the entire width of said crown, comprising grasping at least one of the ends of said cord (7) and exerting a pull in the transverse direction on said cord (7) in order to extract it completely from the crown reinforcement.

2. A method of removing the tread according to Claim 1, characterised in that rubber is removed from at least one shoulder of the tyre by means of a cutting tool until the end (8D) of the zero-degree cord (7) is reached.

3. A method of removing the tread according to one of Claims 1 and 2, characterised in that, after extraction of the zero-degree cord (7), the separation of the tread (10) and carcass (11) is completed by means of a cutting tool.

4. A method of removing the tread according to one of Claims 1 to 3, applied to a tyre, the zero-degree crown reinforcement of which is made from a single cord (7).

5. A method of removing the tread according to one of Claims 1 to 3, characterised in that it is applied by means of a single cord (7) wound from a starting point (8D) on one shoulder of the tyre to the opposite end (8F) on the other shoulder of the tyre.

6. A method of removing the tread according to one of Claims 1 to 3, characterised in that it is applied by means of a single cord (7) wound in two parts, from starting points (8D) and (8F) on the shoulders of the tyre and with the same direction of winding to the centre of said crown of the tyre.

7. A tyre having a crown reinforcement which comprises a spirally wound zero-degree cord over the entire width of said crown, characterised in that the position of at least one of the ends (8D) of said cord (7) which is arranged at zero degrees is marked on at least one shoulder of the tyre.

8. A tyre according to Claim 7, characterised in that the direction (71) of winding of the zero-degree cord starting from the end (8D) is marked on the shoulder of the tyre.

9. A tyre according to one of Claims 7 and 8, characterised in that the zero-degree cord is a single cord (7) wound from a starting point (8D) on one shoulder to the opposite end (8F) on the other shoulder.

10. A tyre according to one of Claims 7 and 8, characterised in that the zero-degree cord is a single cord (7) wound in two parts from starting points (8D) and (8F) on the shoulders of said tyre and with the same direction of winding to the centre of the crown of said tyre.

11. The use of a premoulded annular tread in recapping tyres, the sole of which tread comprises, over its entire width, a zero-degree cord arranged spirally and embedded just below the surface of the sole.

12. A premoulded annular tread, the sole of which comprises, over the entire width of said tread, a zero-degree cord (7) which is arranged spirally, embedded just below the surface of the sole, characterised in that the position of at least one of the ends of said cord (7), arranged at zero degrees, is marked on at least one lateral side of said tread.

13. A tread according to Claim 12, characterised in that the direction of winding (71) of the zero-degree cord from the end of said cord (7) is marked on said side.

14. A tread according to one of Claims 12 and 13, characterised in that the zero-degree cord is a single cord (7) wound from a starting point (8D) against a lateral side of said tread to the opposite end (8F) Of the other side.

15. A tread according to one of Claims 12 and 13, characterised in that the zero-degree cord is a single cord (7) wound in two parts, from starting points (8D) and (8F) against the lateral sides of said tread and with the same direction of winding, to the centre of said crown of the tyre.

## Patentansprüche

1. Verfahren zur Abtrennung des Laufstreifens von einem Luftreifen, dessen Scheitelbewehrung über die gesamte Breite des Reifenscheitels einen unter einem Winkel von Null Grad zur Umfangsrichtung spiralig aufgewickelten Faden (Null-Grad-Faden) aufweist,
das darin besteht, daß mindestens ein Ende des Fadens (7) erfaßt und auf den Faden (7) ein Zug in Querrichtung ausgeübt wird, um den Faden so vollständig aus der Scheitelbewehrung herauszuziehen.

2. Verfahren zur Abtrennung des Laufstreifens nach Anspruch 1, dadurch gekennzeichnet,
daß man mit Hilfe eines Schneidwerkzeugs ausgehend von mindestens einer Reifenschulter Kautschuk entfernt, bis man das Ende (8D) des Null-Grad-Fadens (7) wieder trifft.

3. Verfahren zur Abtrennung des Laufstreifens nach Anspruch 1 oder 2, dadurch gekennzeichnet,
daß man nach dem Herausziehen des Null-Grad-Fadens (7) die Abtrennung des Laufstreifens (10) von der Karkasse (11) mit Hilfe eines Schneidwerkzeugs beendet.

4. Verfahren zur Abtrennung des Laufstreifens nach einem der Ansprüche 1 bis 3 in Anwendung auf einen Luftreifen, dessen Null-Grad-Scheitelbewehrung aus einem einzigen Faden aufgebaut ist.

5. Verfahren zur Abtrennung des Laufstreifens nach einem der Ansprüche 1 bis 3, dadurch gekennzeichnet,
daß es bei einem einzigen Faden (7) angewandt wird, der ausgehend von einem Anfang (8D) an einer Reifenschulter bis zum entgegengesetzten Ende (8F) an der anderen Reifenschulter aufgewickelt ist.

6. Verfahren zur Abtrennung des Laufstreifens nach einem der Ansprüche 1 bis 3,
dadurch gekennzeichnet, daß es bei einem einzigen Faden angewandt wird, der ausgehend von Anfängen (8D und 8F) an den Reifenschultern in zwei Teilen gleichsinnig bis zur Mitte des Reifenscheitels aufgewickelt ist.

7. Luftreifen, dessen Scheitelbewehrung über die gesamte Breite des Reifenscheitels einen spiralig aufgewickelten Null-Grad-Faden aufweist,
dadurch gekennzeichnet, daß die Lage mindestens eines der Enden (8D) des Null-Grad-Fadens auf mindestens einer Reifenschulter markiert ist.

8. Luftreifen nach Anspruch 7,
dadurch gekennzeichnet, daß der Wickelsinn (71) des Null-Grad-Fadens ausgehend vom Ende (8D) auf der Reifenschulter markiert ist.

9. Luftreifen nach Anspruch 7 oder 8,
dadurch gekennzeichnet, daß der Null-Grad-Faden ein einziger Faden (7) ist, der ausgehend von einem Anfang (8D) an einer Reifenschulter bis zum entgegengesetzten Ende (8F) an der anderen Reifenschulter aufgewickelt ist.

10. Luftreifen nach Anspruch 7 oder 8,
dadurch gekennzeichnet, daß der Null-Grad-Faden ein einziger Faden (7) ist, der ausgehend von Anfängen (8D und 8F) an den Reifenschultern in zwei Teilen gleichsinnig bis zur Mitte des Reifenscheitels aufgewickelt ist.

11. Verwendung eines ringförmigen vorgeformten Laufstreifens der auf der innenliegenden Seite über seine gesamte Breite einen spiralig angeordneten und unmittelbar unter der Oberfläche der innenliegenden Seite eingebettenen Null-Grad-Faden aufweist, zur Runderneuerung.

12. Ringförmiger vorgeformter Laufstreifen, der auf seiner innenliegenden Seite über die gesamte Breite des Laufstreifens einen Null-Grad-Faden (7) aufweist, der spiralig angeordnet und unmittelbar unter der Oberfläche der innenliegenden Seite eingebettet ist,
dadurch gekennzeichnet, daß die Lage mindestens eines der Enden des Null-Grad-Fadens (7) auf mindestens einer Seitenfläche des Laufstreifens markiert ist.

13. Laufstreifen nach Anspruch 12,
dadurch gekennzeichnet, daß der Wickelsinn (71) des Null-Grad-Fadens ausgehend vom Ende des Fadens (7) auf der entsprechenden Seitenfläche markiert ist.

14. Laufstreifen nach Anspruch 12 oder 13,
dadurch gekennzeichnet, daß der Null-Grad-Faden ein einziger Faden (7) ist, der ausgehend von einem Anfang (8D) an einer Seitenfläche des Laufstreifens bis zum entgegengesetzten Ende (8F) an der anderen Seitenfläche des Laufstreifens aufgewickelt ist.

15. Laufstreifen nach Anspruch 12 oder 13,
dadurch gekennzeichnet, daß der Null-Grad-Faden ein einziger Faden (7) ist, der ausgehend von Anfängen (8D und 8F) an den Seitenflächen des Laufstreifens in zwei Teilen gleichsinnig bis zur Mitte des Reifenscheitels aufgewickelt ist.
